(19) Europäisches Patentamt
European Patent Office
Office européen des brevets

(11) Veröffentlichungsnummer: **0 455 054 B1**

(12) **EUROPÄISCHE PATENTSCHRIFT**

(45) Veröffentlichungstag der Patentschrift: **26.10.94**

(51) Int. Cl.⁵: **C09B 62/25**, D06P 1/382

(21) Anmeldenummer: **91106185.1**

(22) Anmeldetag: **18.04.91**

Die Akte enthält technische Angaben, die nach dem Eingang der Anmeldung eingereicht wurden und die nicht in dieser Patentschrift enthalten sind.

(54) **Polyazoreaktivfarbstoffe.**

(30) Priorität: **01.05.90 DE 4013986**

(43) Veröffentlichungstag der Anmeldung:
**06.11.91 Patentblatt 91/45**

(45) Bekanntmachung des Hinweises auf die Patenterteilung:
**26.10.94 Patentblatt 94/43**

(84) Benannte Vertragsstaaten:
**CH DE FR GB LI**

(56) Entgegenhaltungen:
**EP-A- 0 208 331**
**DE-A- 1 644 203**

(73) Patentinhaber: **BAYER AG**
**D-51368 Leverkusen (DE)**

(72) Erfinder: **Herd, Karl-Josef, Dr.**
**Am Gartenfeld 66**
**W-5068 Odenthal-Holz (DE)**
Erfinder: **Henk, Hermann, Dr.**
**Roggendorfstrasse 66**
**W-5000 Koeln 80 (DE)**
Erfinder: **Schündehütte, Karl-Heinz, Prof. Dr.**
**Klief 75**
**W-5090 Leverkusen 3 (DE)**
Erfinder: **Stöhr, Frank-Michael, Dr.**
**Am Thelen Siefen 10**
**W-5068 Odenthal-Osenau (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der vorliegenden Erfindung sind neue Polyazoreaktivfarbstoffe der Formel

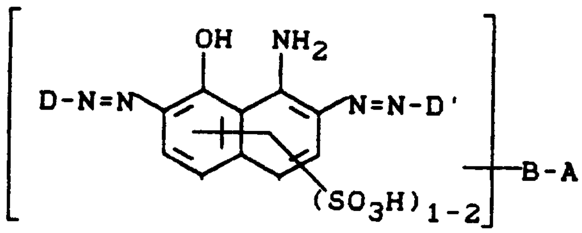

(1)

in welcher

A für den Rest der Formel

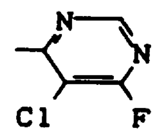

steht,

B für ein Brückenglied steht, wobei die Gruppierung -B-A mit einem Kohlenstoffatom eines aromatischen oder heteroaromatischen Ringsystems in D oder D' verknüpft ist, und

D und D' für den Rest einer Diazokomponente aus der Benzol-, Naphthalin- oder Hetaryl-Reihe stehen,

ausgenommen der Farbstoff der Formel

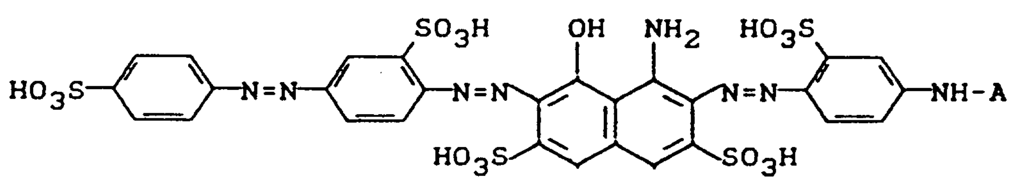

(2),

sowie Verfahren zu deren Herstellung und deren Verwendung zum Färben und Bedrucken hydroxyl- oder amidgruppenhaltiger Materialien.

Die aus EP-A-208 331 bekannten Farbstoffe unterscheiden sich hiervon in den Reaktivgruppen. Farbstoff 2 wird angegeben in DE-A-16 44 203, Beispiel 21, letzte Verbindung.

Die Reste D und D' können gleich oder verschieden sein und jeweils weitere Substituenten, wie beispielsweise $C_1$-$C_4$-Alkyl, $C_1$-$C_4$-Alkoxy, Amino, Hydroxy, Halogen, Acylamino, Carboxy, $C_1$-$C_4$-Alkoxycarbonyl, Carbonamido, $C_1$-$C_4$-Alkylsulfonyl, Benzoylamino, Phenylsulfonyl, $\beta$-Hydroxysulfonyl, $\beta$-Sulfatoethylsulfonyl, $\beta$-Chlorethylsulfonyl, Vinylsulfonyl, (Methylsulfonyl)amino, Phenylazo, Sulfophenylazo, Disulfophenylazo, Carboxyphenylazo und ($\beta$-Sulfatoethylsulfonyl)phenylazo, Benzthiazol-2-yl oder Naphtho[1,2-d]-triazol-2-yl, vorzugsweise Sulfogruppen aufweisen.

B steht vorzugsweise für $-(CH_2)_{0-1}$-NR- oder $-SO_2-CH_2CH_2$-NR-, wobei die Bindung zu A jeweils über das Stickstoffatom erfolgt, und

R für Wasserstoff oder gegebenenfalls durch Hydroxy, Chlor, Carboxy, Sulfo oder Sulfato substiutiertes $C_1$-$C_4$-Alkyl steht.

Bevorzugt sind Trisazoreaktivfarbstoffe der Formeln

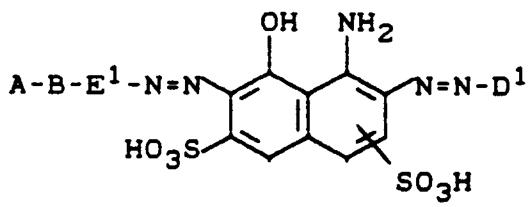

(3)

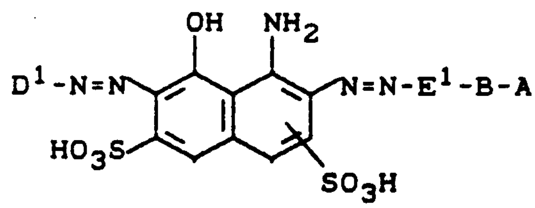

(4)

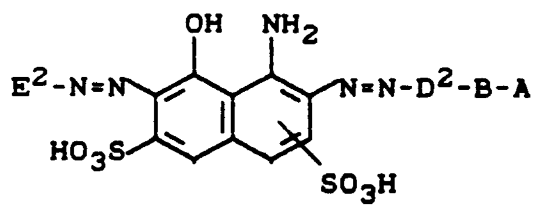

(5)

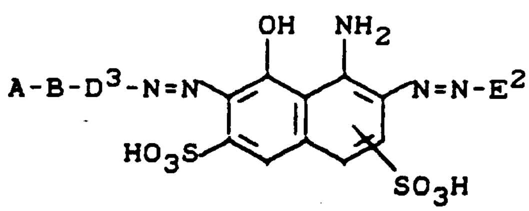

(6)

worin

-B-E¹- für

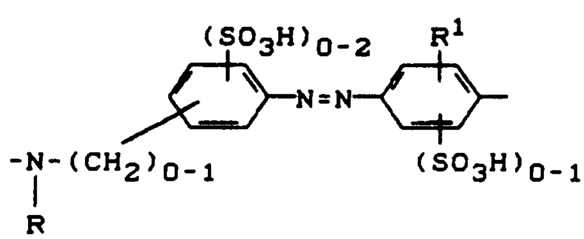

oder

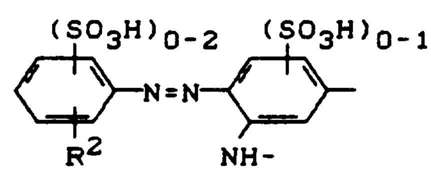

steht,

D¹ für

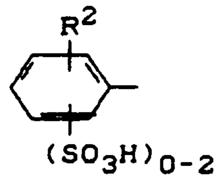

,

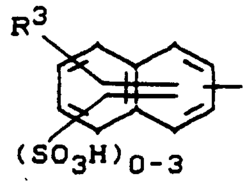

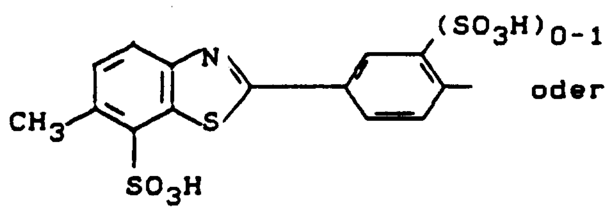

oder

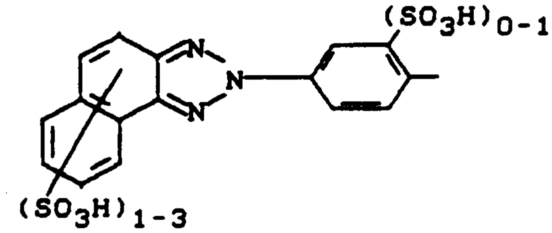

steht,

$E^2$ für

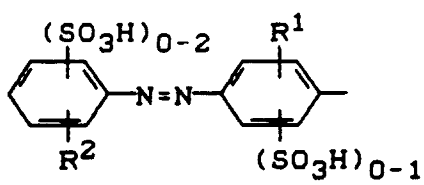

steht,

-B-$D^2$- für

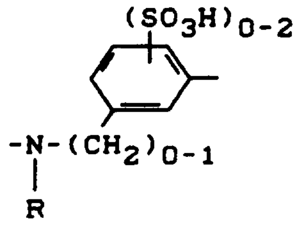 , 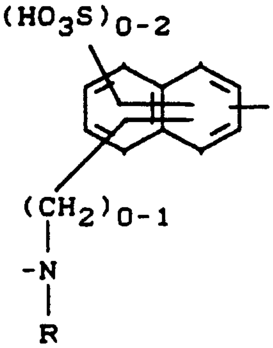 ,

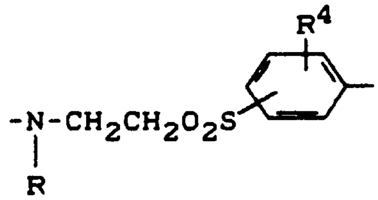 oder 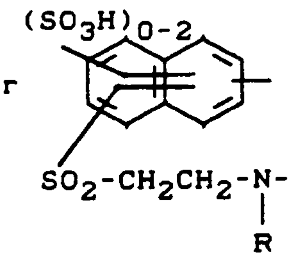

steht,
und

-B-$D^3$- für

-B-$D^2$- oder

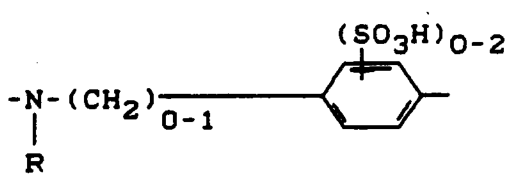

steht,
wobei

| | |
|---|---|
| $R^1$ für | H, $CH_3$, -$C_2H_5$, -$OCH_3$, -$OC_2H_5$, Cl, Br, -$NHCOCH_3$ oder -$NHCONH_2$ steht und |
| $R^2$ für | H, $CH_3$, -$C_2H_5$,-$OCH_3$, -$OC_2H_5$, Cl, Br, -$CO_2H$, -$NHCOCH_3$, -$SO_2CH=CH_2$, -$SO_2CH_2CH_2OSO_3H$ oder -$SO_2CH_2CH_2Cl$ steht, |
| $R^3$ für | H, Cl, -$OCH_3$, -$OC_2H_5$, -$SO_2CH=CH_2$, -$CO_2H$, -$SO_2CH_2CH_2Cl$ oder -$SO_2CH_2CH_2OSO_3H$ steht und |
| $R^4$ für | H, $CH_3$, Cl, Br, -COOH, -$SO_3H$ oder -$OCH_3$ steht, und |
| A und R | die oben angegebene Bedeutung haben. |

Besonders bevorzugte Farbstoffe sind solche der Formeln

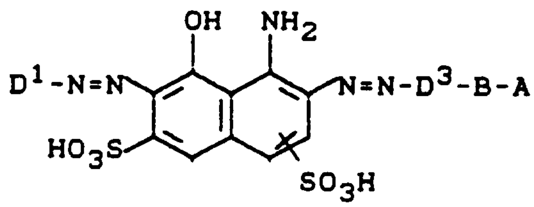

(7)

und

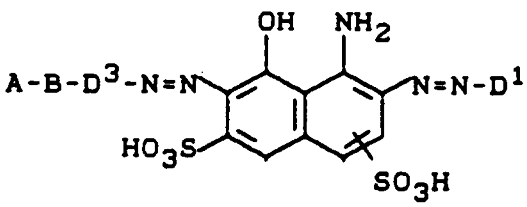

(8)

worin

$D^1$ und $-B-D^3$ die oben genannte Bedeutung zukommt.

Darunter sind folgende Farbstoffe besonders hervorzuheben:

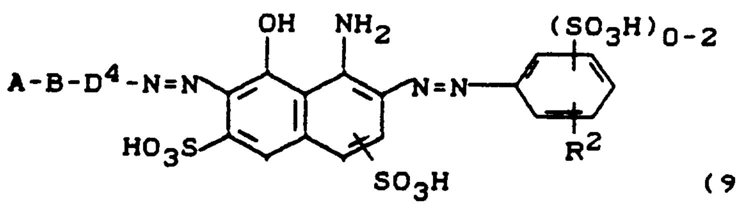

(9)

worin

$B-D^4-$ für

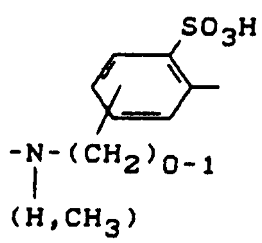

,

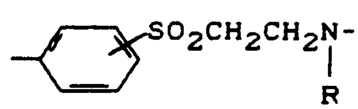

oder

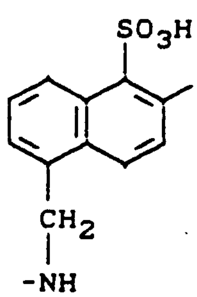

steht,

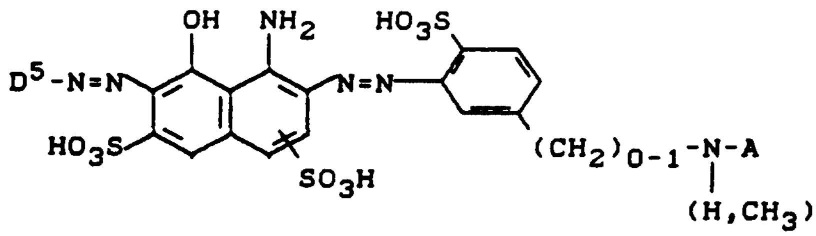

(10)

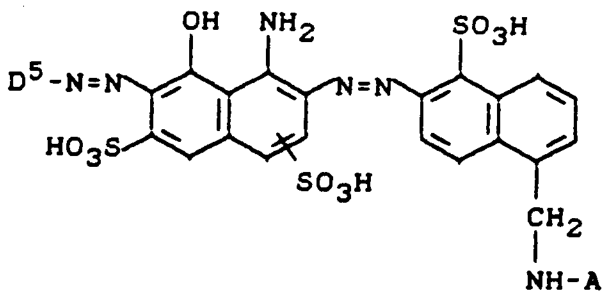

(11)

worin

$D^5$ für

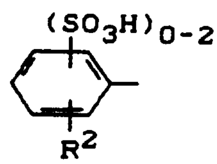

oder

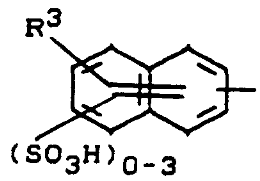

steht,

Die Farbstoffe der Formel (1) sind nach verschiedenen Verfahren herstellbar:

a) Man kondensiert Polyazochromophore der Formel

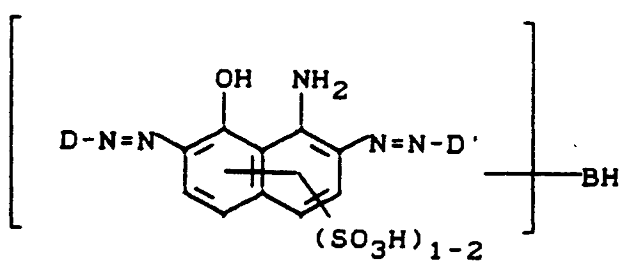

(12)

in welcher

B eine endständige, acylierbare Aminogruppe enthält,

und

D und D' die oben angegebene Bedeutung haben,

mit 5-Chlor-4,6-difluorpyrimidin in Gegenwart säurebindender Mittel wie beispielsweise Alkalihydroxid oder Alkalicarbonat.

b) Man diazotiert eine Diazokomponente der Formel

$A-B-D-NH_2$ (13)

in welcher

A, B und D die oben angegebene Bedeutung haben,

und kuppelt das resultierende Diazoniumsalz auf eine Kupplungskomponente der Formel

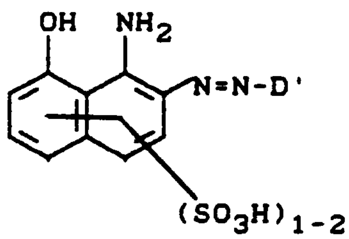

(14)

in welcher

D' die oben angegebene Bedeutung hat.

c) Man diazotiert eine Diazokomponente der Formel

$D-NH_2$ (15)

in welcher

D die oben angegebene Bedeutung hat,

und kuppelt das Diazoniumsalz auf eine Kupplungskomponente der Formel

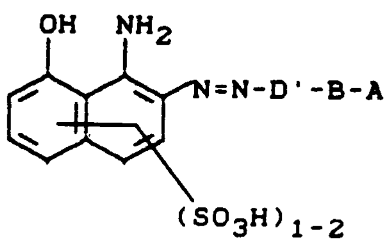

(16)

in welcher

D', B und A die oben angegebene Bedeutung haben.

Verbindung (16) erhält man, indem man Aminoverbindungen der Formel

$A-B-D'-NH_2$ (17)

in welcher

A, B und D' die oben angegebene Bedeutung haben,

diazotiert, und auf 1-Amino-8-hydroxy-naphthalin-di- bzw. monosulfonsäuren kuppelt,

oder

indem man Verbindungen der Formel

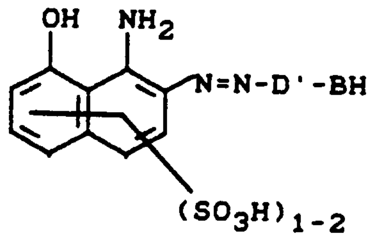

(18)

in welcher

B eine endständige, acylierbare Aminogruppe enthält,

und

D' die oben angegebene Bedeutung hat,

mit 5-Chlor-4,6-difluorpyrimidin kondensiert.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen guten Fixiergrad aus. Die mit diesen Farbstoffen erhältlichen Färbungen und Drucke auf Cellulosematerialien zeichnen sich außerdem durch eine hohe Fsser-Farbstoff-Bindungsstabilität sowie durch eine hervorragende Stabilität gegenüber Oxidationsmitteln, wie peroxid- oder chlorhaltigen Waschmitteln, aus.

Die Auswaschbarkeit der beim Färben oder Druck nur in geringem Maße entstehenden Hydrolyseprodukte ist ausgezeichnet. Die Farbstoffe besitzen gute Naßechtheiten.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die Farbstoffe können sowohl als Feststofformierungen als auch als konzentrierte Lösungen eingesetzt werden.

Beispiel 1

A) 49,2 g der Verbindung der Formel

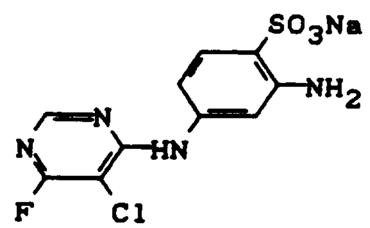

die durch Kondensation von 2,4 Diaminobenzolsulfonsäure mit 5-Chlor-4,6-difluorpyrimidin hergestellt worden war, wurden in 300 ml Wasser und 40 ml konzentrierter Salzsäure bei 0°C suspendiert. Innerhalb von 15 Minuten tropfte man eine Lösung von 10,5 g Natriumnitrit in 30 ml Wasser zu. Durch Eiszugabe hielt man die Temperatur im Bereich von 0-4°C. Nach 30 minütigem Nachrühren war die Diazotierung beendet. Es resultiert eine hellgelbe Suspension. Der Nitritüberschuß wurde mit Amidosulfonsäurelösung zerstört.

Diese Suspension wurde nun über einen Zeitraum von 15-20 Minuten zu einer Lösung von 82,5 g der Monoazoverbindung der Formel

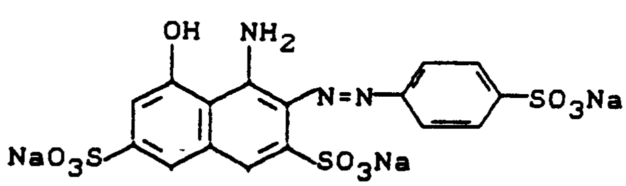

in 500 ml Wasser bei pH 7 zudosiert, und dabei der pH-Wert durch Zugabe einer 20 %igen Sodalösung zwischen 6 und 8 gehalten. Zur Vervollständigung der Kupplungsreaktion wurde 1 Stunde bei pH 7-8 nachgerührt, und anschließend durch Zugabe von 70 g Kochsalz der Farbstoff ausgesalzen. Nach Isolierung und Trocknung erhielt man ca. 150 g eines salzhaltigen schwarzen Farbstoffpulvers, dem die Struktur

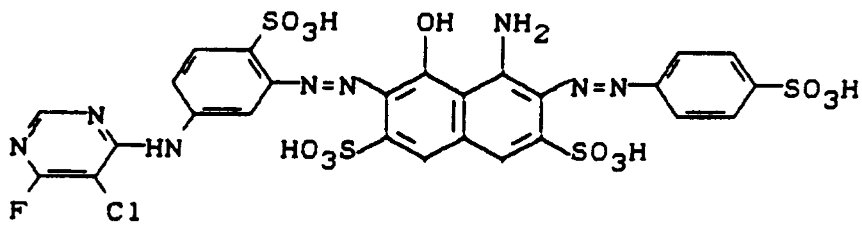

zukommt ($\lambda_{max}$ = 598 nm ($H_2O$)) Und das Baumwolle nach den für Reaktivfarbstoffe üblichen Färbe- oder Druckverfahren in marineblauen bis schwarzen Farbtönen färbt.

B) Der unter A) beschriebene Reaktivfarbstoff war auch darstellbar, indem man eine Lösung von 133,4 g der Diazofarbbase der Formel

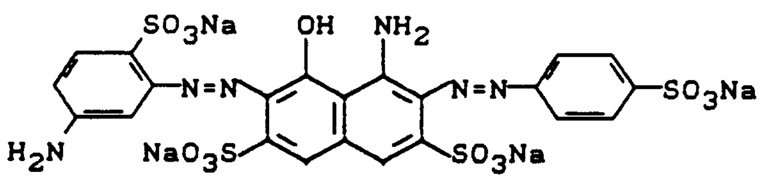

in 750 ml Wasser bei 50 °C und einem konstanten pH-Wert von 7-8 (Zugabe von Sodalösung) mit 24 g 5-Chlor-4,6-difluorpyrimidin kondensierte und den Farbstoff wie unter A) beschrieben bei 20-25 °C isolierte.

Weitere wertvolle Reaktivfarbstoffe erhielt man, wenn man in Analogie zu Beispiel 1 die Diazokomponenten wie folgt variierte:

**Tabelle 1**

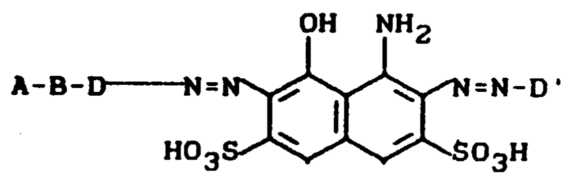

A = 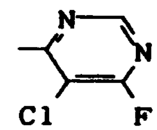

| Beispiel | A-B-D- | D'- | Farbton |
|---|---|---|---|
| 2 | 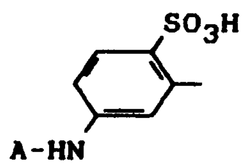 | 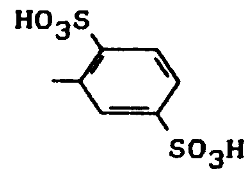 | marineblau/schwarz (610 nm) |
| 3 | " | 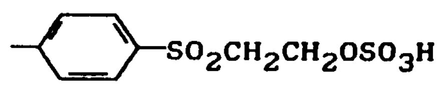 | marineblau/schwarz (604 nm) |
| 4 | " | 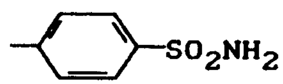 | marineblau (602 nm) |
| 5 | " | 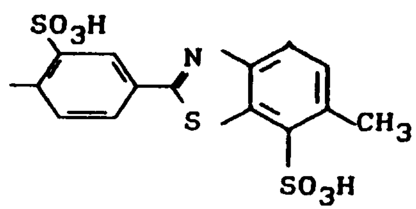 | grünstichig blau |

Tabelle 1 (Fortsetzung)

| Beispiel | A-B-D- | D'- | Farbton |
|---|---|---|---|
| 6 | 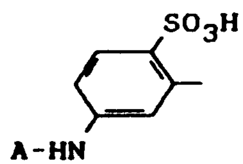 | 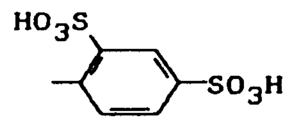 | marineblau (611 nm) |
| 7 | " | 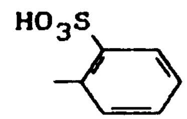 | marineblau/schwarz (600 nm) |
| 8 | " | 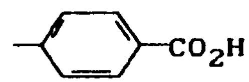 | marineblau |
| 9 | " | 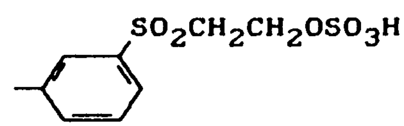 | marineblau (602 nm) |
| 10 | " | 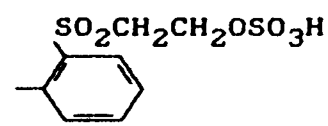 | marineblau (605 nm) |
| 11 | " | 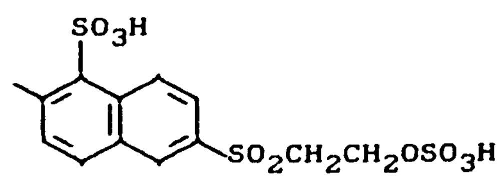 | grünstichig schwarz |

**Tabelle 1** (Fortsetzung)

| Beispiel | A-B-D- | D'- | Farbton |
|---|---|---|---|
| 12 | 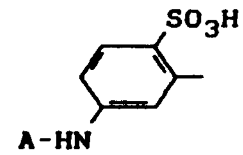 | 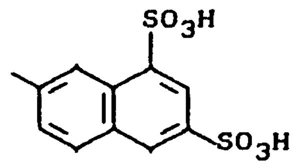 | grünstichig schwarz |
| 13 | " | 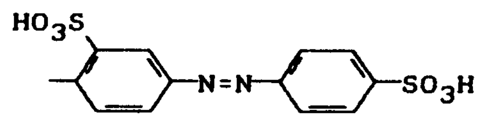 | dunkelgrün |
| 14 | " | 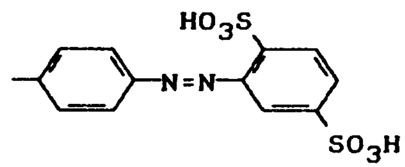 | " |
| 15 | 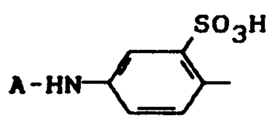 | 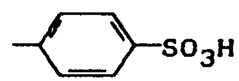 | grünstichig dunkelblau |
| 16 | " | 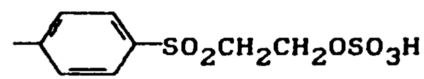 | " |
| 17 | " | 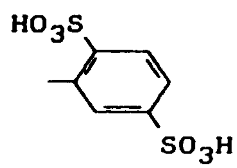 | " |

<u>**Tabelle 1**</u> **(Fortsetzung)**

| Beispiel | A-B-D- | D'- | Farbton |
|---|---|---|---|
| 18 | 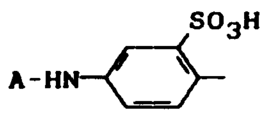 | 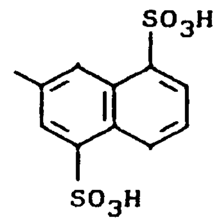 | grünstichig dunkelblau |
| 19 | 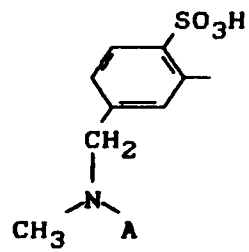 | 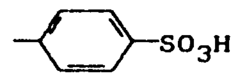 | rotstichig marineblau |
| 20 | " | 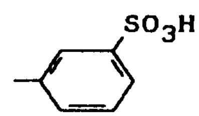 | " |
| 21 | " | 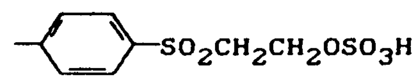 | marineblau/schwarz |
| 22 | | 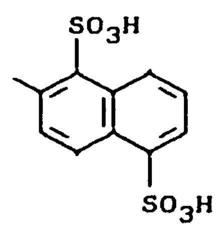 | " |

**Tabelle 1** (Fortsetzung)

| Beispiel | A-B-D- | D'- | Farbton |
|---|---|---|---|
| 23 | 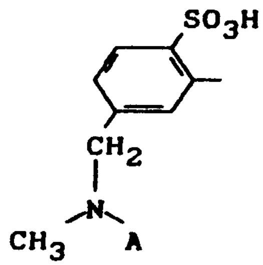 | 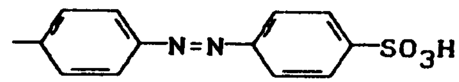 | grünstichig schwarz |
| 24 | " | 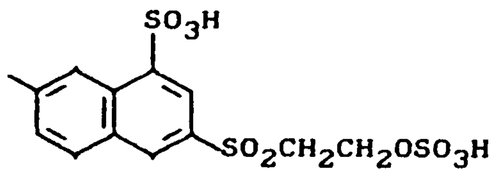 | " |
| 25 | " | 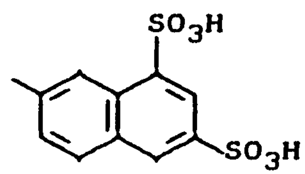 | marineblau |
| 26 | 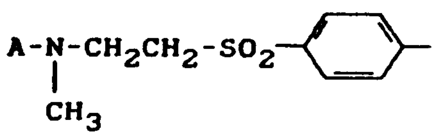 | 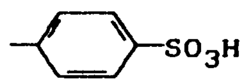 | marineblau/schwarz |

**Tabelle 1** (Fortsetzung)

| Beispiel | A-B-D- | D'- | Farbton |
|---|---|---|---|
| 27 | 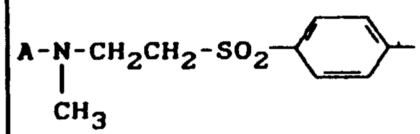 | 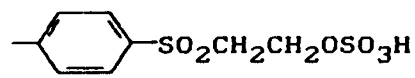 | marineblau/schwarz |
| 28 | " | 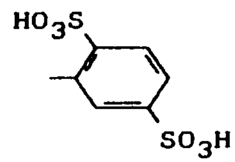 | " |
| 29 | 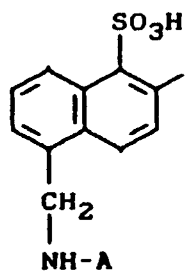 | 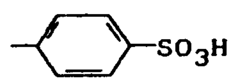 | " |
| 30 | " | 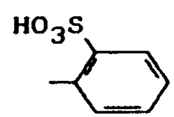 | " |
| 31 | " | 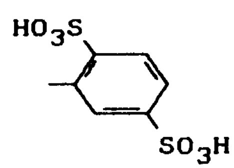 | " |

**Tabelle 1** (Fortsetzung)

| Beispiel | A-B-D- | D'- | Farbton |
|---|---|---|---|
| 32 | 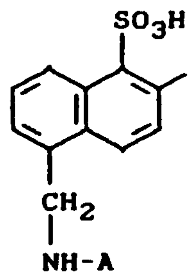 | 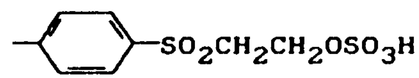 | marineblau/schwarz |
| 33 | " | 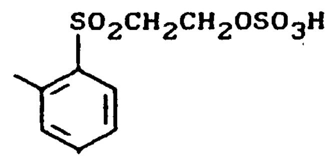 | " |
| 34 | " | 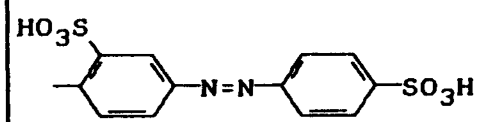 | dunkelgrün/schwarz |
| 35 | " | 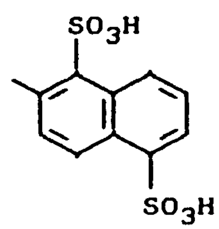 | grünstichig blau |

**Tabelle 1** (Fortsetzung)

| Beispiel | A-B-D- | D'- | Farbton |
|---|---|---|---|
| 36 | 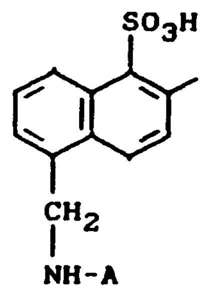 | 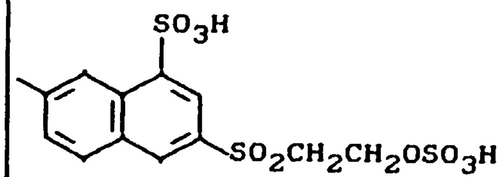 | grünstichig schwarz |
| 37 | 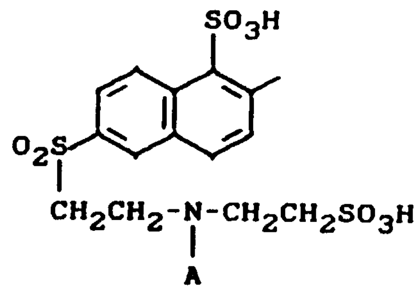 | 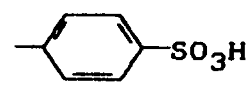 | marineblau/schwarz |
| 38 | " | 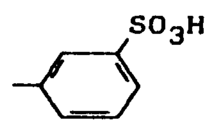 | " |
| 39 | " | 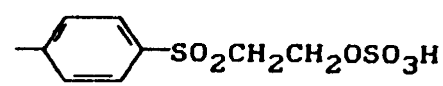 | " |

Tabelle 1 (Fortsetzung)

| Beispiel | A-B-D- | D'- | Farbton |
|---|---|---|---|
| 40 | 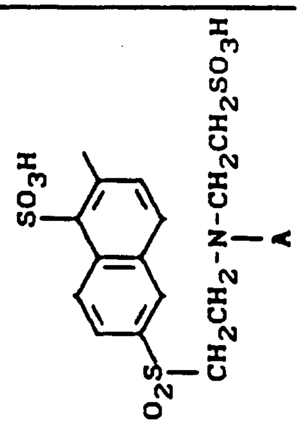 | 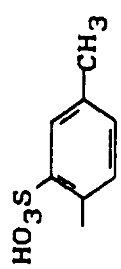 | marineblau/schwarz |

Beispiele 41 bis 80:

Farbstoffe dieser Beispiele erhielt man, wenn man in Beispiel 1 bis 40 anstelle der Kupplungskomponente 1-Amino-8-hydroxy-3,6-naphthalindisulfonsäure nun die 1-Amino-8-hydroxy-4,6-naphthalindisulfonsäure einsetzte. Exemplarisch ist Beispiel 43 als Formel wiedergegeben:

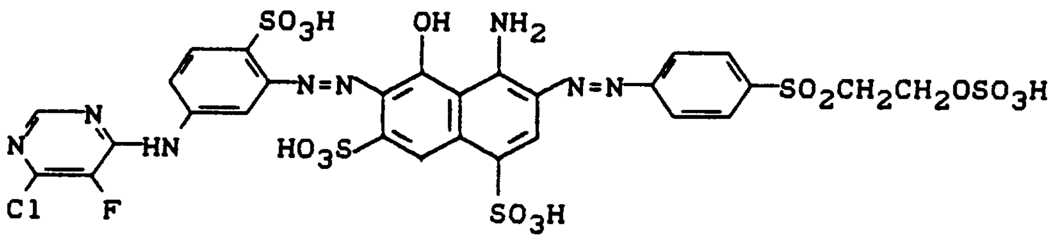

rotstichig marineblau/schwarz
(586 nm)

Beispiel 81

49,2 g der Diazokomponente aus Beispiel 1A) wurden wie dort beschrieben bei 0-4 °C diazotiert.

In die Diazoniumsalzsuspension wurde dann innerhalb von 15 Minuten eine Lösung von 52,6 g 1-Amino-8-hydroxy-3,6-naphthalindisulfonsäure-di-Natriumsalz in 250 ml Wasser zudosiert. Es wurde eine Stunde bei einem pH-Wert von 1,5-2,5 und einer Temperatur von 5-10 °C gerührt. Danach wurde durch langsame Zugabe einer 20 %igen Natriumacetatlösung der pH-Wert auf 3,5 erhöht und nochmals 3 Stunden bei diesem pH-Wert und 10-20 °C gerührt. Nach erfolgter Kupplung wurde mit 20 %iger Sodalösung auf pH 7,5 gestellt.

Zu dieser roten Kupplungslosung gab man während eines Zeitraums von 30 Minuten die Mischung eines Diazoniumsalzes, die durch Diazotieren von 47,1 g 2-Amino-1,5-naphthalindisulfonsäure-mono-Natriumsalz erhalten worden war, und hielt dabei durch Zugabe von 20 %iger Sodalösung den pH-Wert im Bereich von 6,5-8,0. Es wurde 2 Stunden bei pH 7-8 nachgerührt und mit ausreichend Kaliumchlorid ausgesalzen. Der ausgefallene Farbstoff wurde durch Abnutschen isoliert und getrocknet. Das schwarze Farbstoffpulver, dem die Struktur

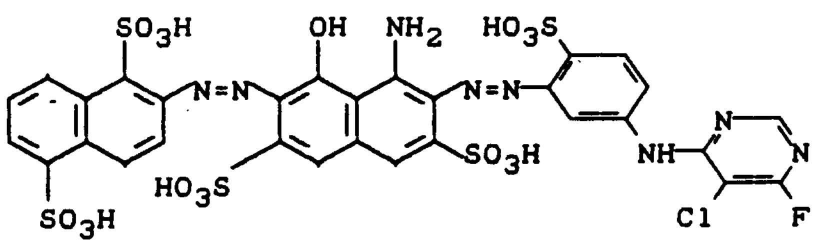

zukommt, färbt Baumwolle in marineblauen bis schwarzen Farbtönen ($\lambda_{max}$ = 610 nm).

Der Reaktivfarbstoff, der auch bevorzugt im Reaktivdruck Anwendung findet, war auch durch Kondensation von 5-Chlor-4,6-difluorpyrimidin mit der Disazofarbbase der Formel

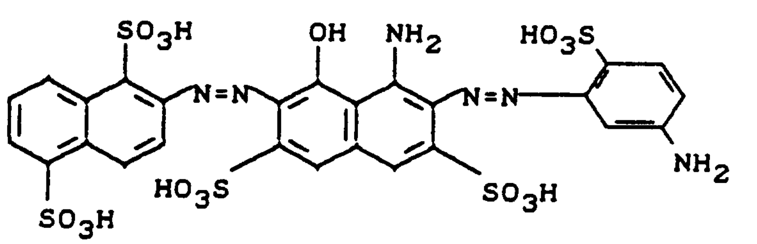

herstellbar.

Durch Variation der faserreaktiven wie auch der nichtfaserreaktiven Diazokomponente ließen sich weitere interessante Reaktivfarbstoffe in Analogie zu Beispiel 81 synthetisieren:

**Tabelle 2**

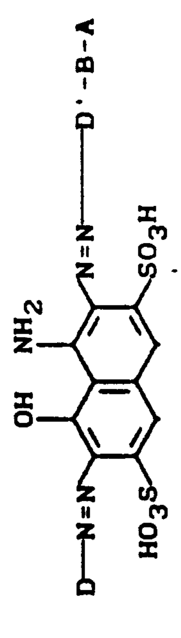

A = 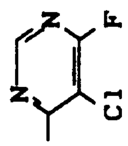

| Beispiel | -D | -D'-B-A | Farbton |
|---|---|---|---|
| 82 | 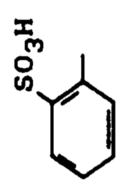 | 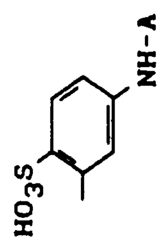 | marineblau (606 nm) |
| 83 | 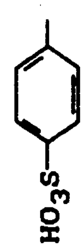 | " | marineblau (608 nm) |
| 84 | 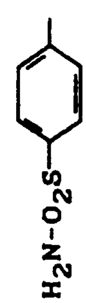 | " | marineblau (604 nm) |
| 85 | 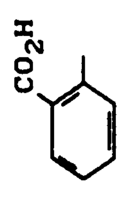 | " | marineblau |

**Tabelle 2** (Fortsetzung)

| Beispiel | -D | -D'-B-A | Farbton |
|---|---|---|---|
| 86 | 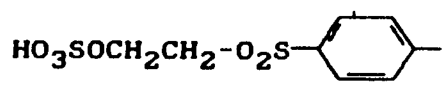 | 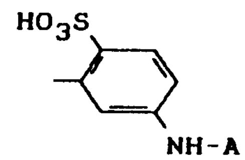 | marineblau (602 nm) |
| 87 | 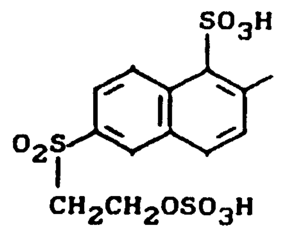 | „ | grünstichig marineblau |
| 88 | 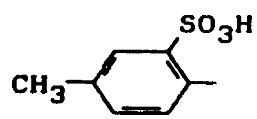 | „ | marineblau |
| 89 | 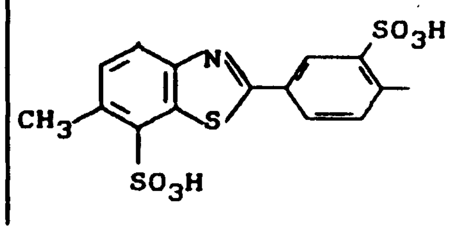 | „ | grünstichig schwarz |

**Tabelle 2** (Fortsetzung)

| Beispiel | -D | -D'-B-A | Farbton |
|---|---|---|---|
| 90 | 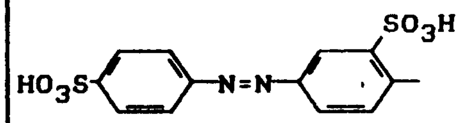 | 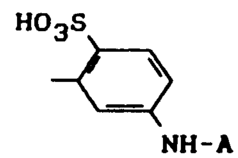 | grünstichig schwarz |
| 91 | 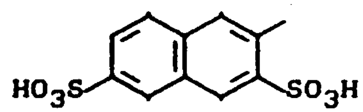 | " | grünstichig marineblau |
| 92 | 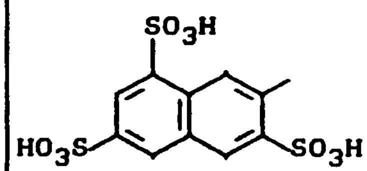 | " | " |
| 93 | 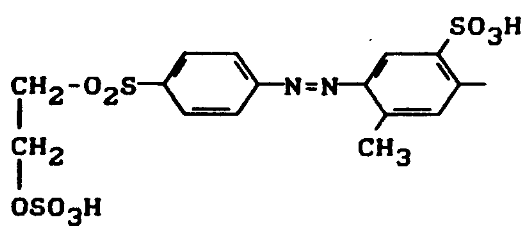 | " | schwarz |
| 94 | 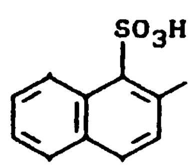 | 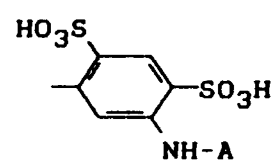 | marineblau |

<u>**Tabelle 2**</u> (Fortsetzung)

| Beispiel | -D | -D'-B-A | Farbton |
|---|---|---|---|
| 95 | 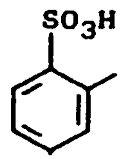 | 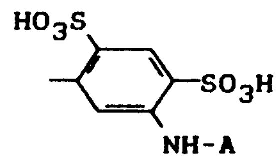 | marineblau |
| 96 | 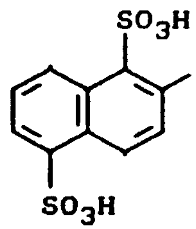 | 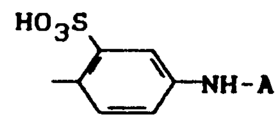 | grünstichig blau |
| 97 | 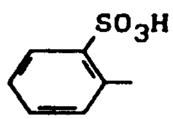 | " | " |
| 98 | 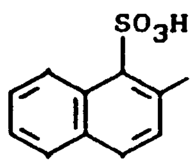 | 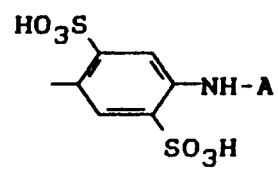 | " |
| 99 | 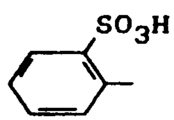 | " | " |

**Tabelle 2** (Fortsetzung)

| Beispiel | -D | -D'-B-A | Farbton |
|---|---|---|---|
| 100 | 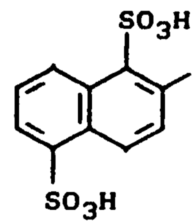 | 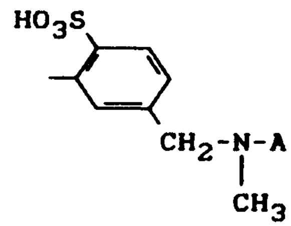 | marineblau |
| 101 | 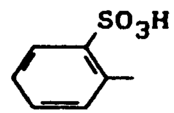 | " | " |
| 102 | 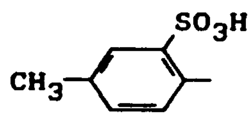 | " | " |
| 103 | 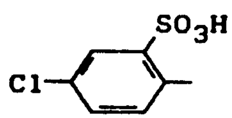 | " | " |
| 104 | 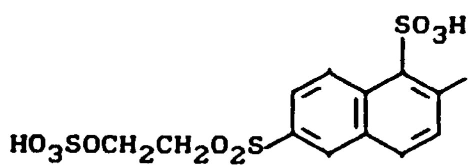 | " | grünstichig marineblau |

**Tabelle 2** (Fortsetzung)

| Beispiel | -D | -D'-B-A | Farbton |
|---|---|---|---|
| 105 | 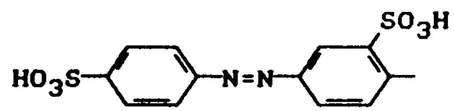 | 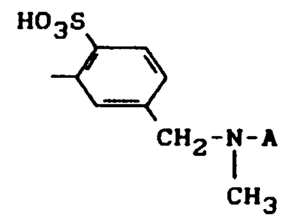 | dunkelgrün |
| 106 | 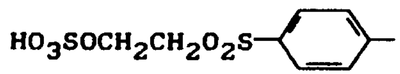 | 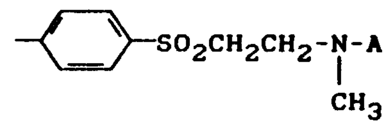 | marineblau schwarz |
| 107 | 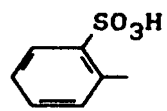 | " | " |
| 108 | 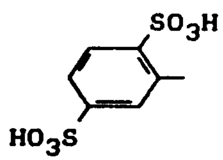 | " | " |
| 109 | 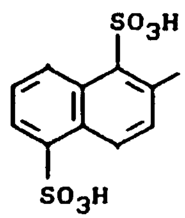 | " | grünstichig marineblau |
| 110 | " | 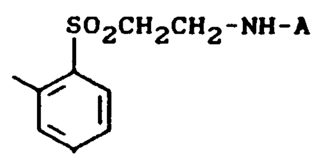 | " |

**Tabelle 2** (Fortsetzung)

| Beispiel | -D | -D'-B-A | Farbton |
|---|---|---|---|
| 111 | 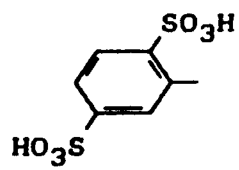 | 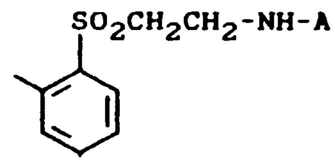 | grünstichig marineblau |
| 112 | 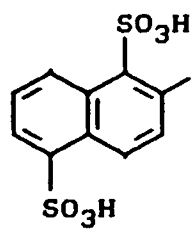 | 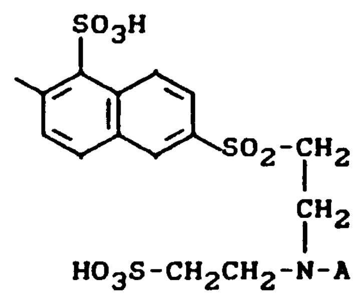 | " |
| 113 | 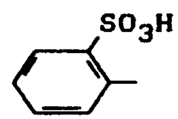 | " | " |
| 114 | " | 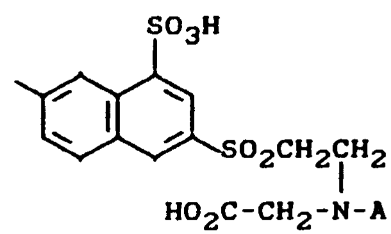 | " |

**Tabelle 2** (Fortsetzung)

| Beispiel | -D | -D'-B-A | Farbton |
|---|---|---|---|
| 115 | 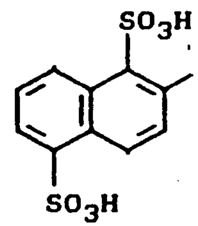 | 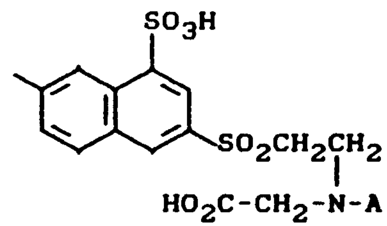 | grünstichig marineblau |
| 116 | " | 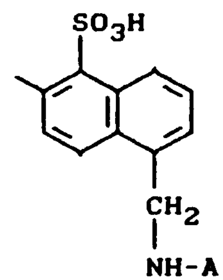 | " |
| 117 | 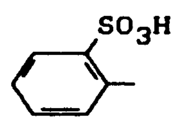 | " | " |
| 118 | 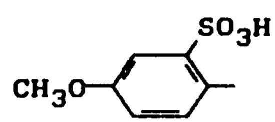 | " | grünstichig schwarz |

**Tabelle 2** (Fortsetzung)

| Beispiel | -D | -D'-B-A | Farbton |
|---|---|---|---|
| 119 | 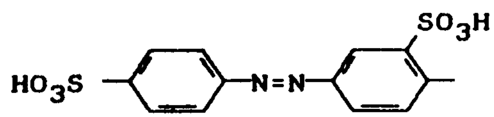 | 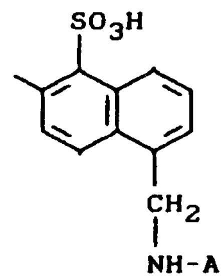 | dunkelgrün |
| 120 | 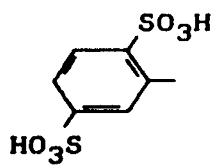 | 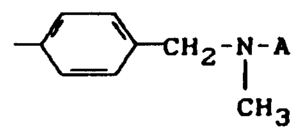 | marineblau |
| 121 | 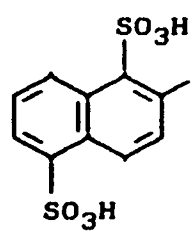 | 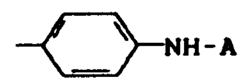 | grünstichig schwarz |

**Tabelle 2 (Fortsetzung)**

| Beispiel | -D | -D'-B-A | Farbton |
|---|---|---|---|
| 122 | 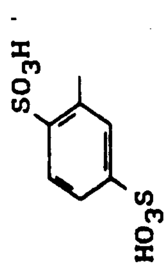 | 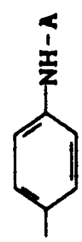 | grünstichig schwarz |

Beispiele 123 bis 164:

Farbstoffe dieser Beispiele erhielt man, wenn man in Beispiel 81 bis 122 anstelle der Kupplungskomponent 1-Amino-8-hydroxy-3,6-naphthalindisulfonsäure nun die 1-Amino-8-hydroxy-4,6-naphthalindisulfonsäure

einsetzte. Die Farbtöne der Beispiele 123 bis 164 sind auf Baumwolle alle etwas rotstichiger als die analogen Farbstoffe 81 bis 122, wie z.B. Beispiel 123:

Beispiel 123:

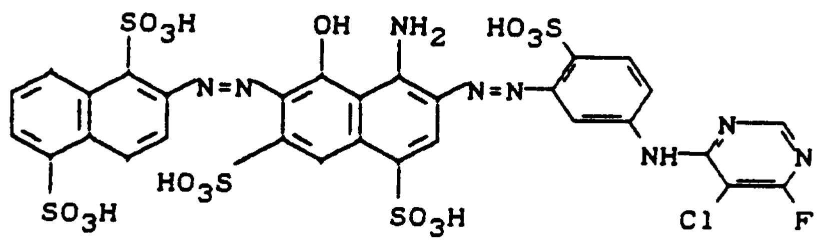

(etwas rotstichiger als Beispiel 81).

**Patentansprüche**

**1.** Farbstoffe der Formel

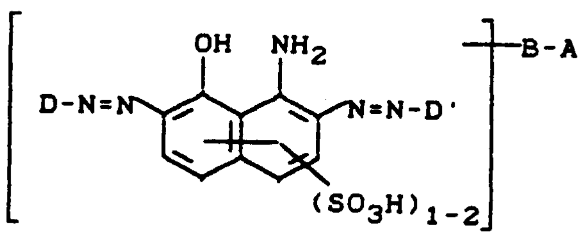

(1)

in welcher

A für den Rest der Formel

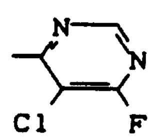

steht,

B für ein Brückenglied steht,

wobei die Gruppierung

-B-A

mit einem Kohlenstoffatom eines aromatischen oder heteroaromatischen Ringsystems in D oder D' verknüpft ist, und

D und D' für den Rest einer Diazokomponente aus der Benzol-, Naphthalin- oder Hetaryl-Reihe stehen,

ausgenommen der Farbstoff der Formel

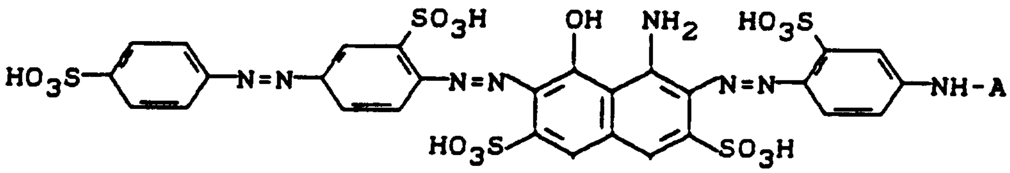

(2).

2. Farbstoffe gemaß Anspruch 1, in welchen

B für $-(CH_2)_{0-1}$-NR- oder $-SO_2-CH_2CH_2$-NR- steht, wobei die Bindung zu A jeweils über das Stickstoffatom erfolgt, und

R für Wasserstoff oder gegebenenfalls durch Hydroxy, Chlor, Carboxy, Sulfo oder Sulfato substituiertes $C_1$-$C_4$-Alkyl steht.

3. Farbstoffe der Ansprüche 1 und 2 der Formeln

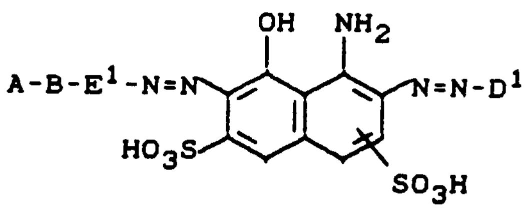

(3)

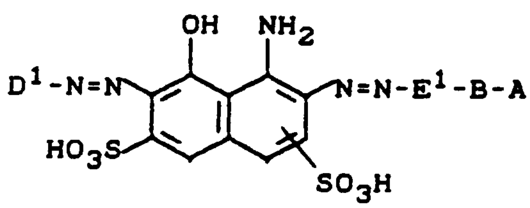

(4)

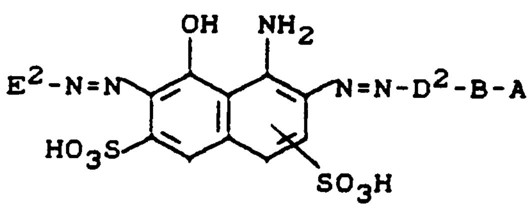

(5)

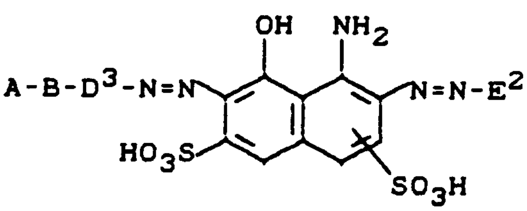

(6)

worin

-B-$E^1$- für

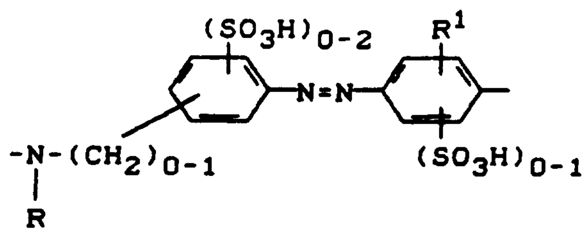

oder

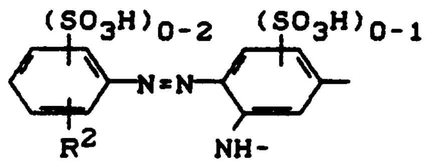

steht,

$D^1$ für

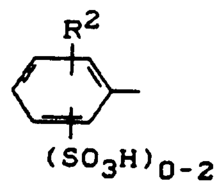

,

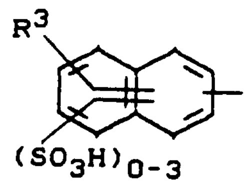

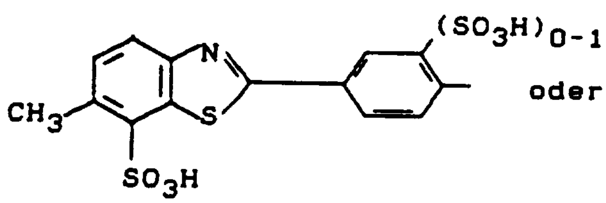

oder

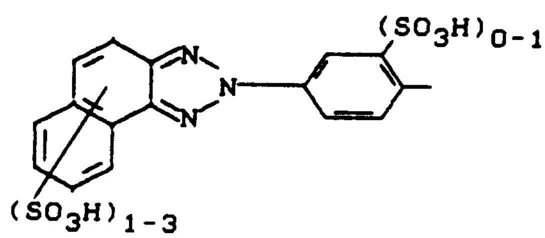

steht,

$E^2$ für

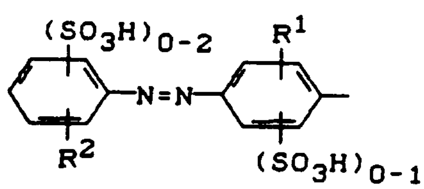

steht,

$-B-D^2-$ für

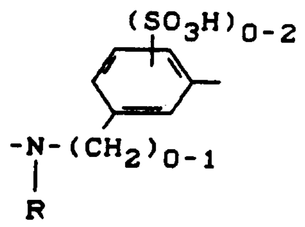
,
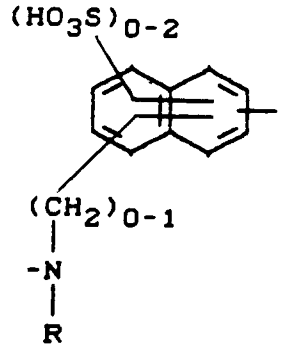
,

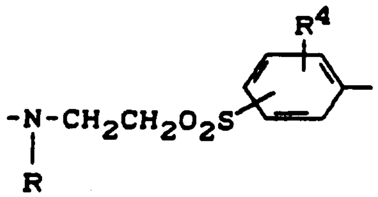
oder
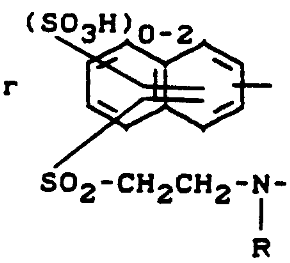

steht,
und

-B-$D^3$- für
B-$D^2$- oder

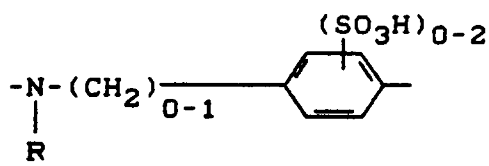

steht,
wobei

$R^1$ für H, $CH_3$, $-C_2H_5$, $-OCH_3$, $-OC_2H_5$, Cl, Br, $-NHCOCH_3$ oder $-NHCONH_2$, steht,

$R^2$ für H, $CH_3$, $-C_2H_5$, $-OCH_3$, $-OC_2H_5$, Cl, Br, $-CO_2H$, $-NHCOCH_3$, $-SO_2CH=CH_2$, $-SO_2CH_2CH_2OSO_3H$ oder $-SO_2CH_2CH_2Cl$ steht,

$R^3$ für H, Cl, $-OCH_3$, $-OC_2H_5$, $-SO_2CH=CH_2$, $-CO_2H$, $-SO_2CH_2CH_2Cl$ oder $-SO_2CH_2CH_2OSO_3H$ steht und

$R^4$ für H, $CH_3$, Cl, Br, -COOH, $-SO_3H$ oder $-OCH_3$ steht.

**4.** Farbstoffe der Ansprüche 1, 2 und 3 der Formeln

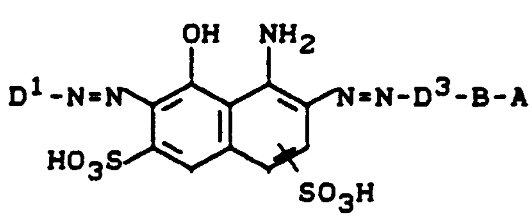
(7)

und

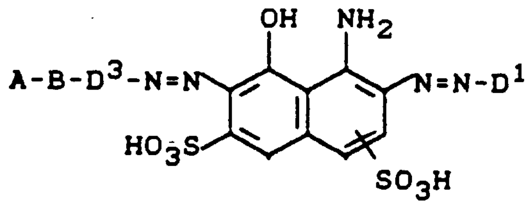

(8).

5. Farbstoffe der Ansprüche 1-3 der Formel

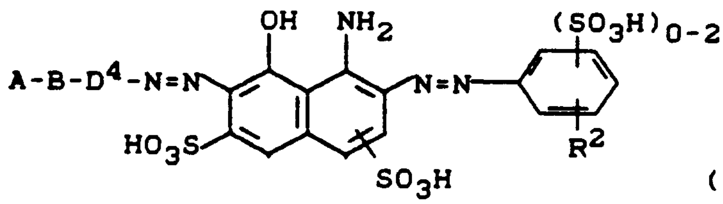

(9)

in welcher
B-$D^4$- für

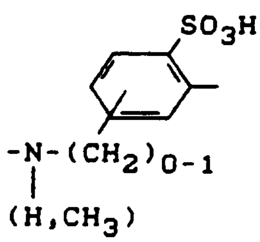

,

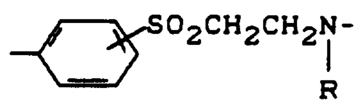

oder

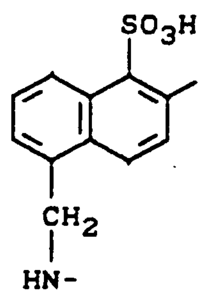

steht.

6. Farbstoffe des Anspruchs 1 der Formeln

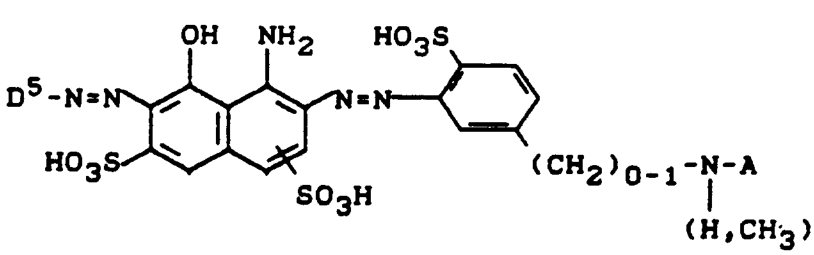

(10)

und

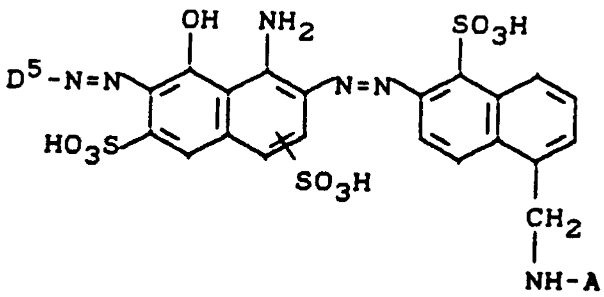

(11)

in welchen

$D^5$ für

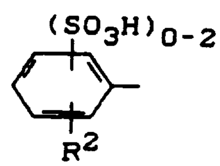

oder

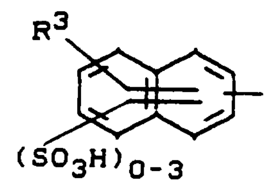

steht.

7. Verwendung der Farbstoffe der Ansprüche 1-6 zum Färben und Bedrucken von hydroxyl- oder amidgruppenhaltigen Materialien.

8. Mit Farbstoffe der Ansprüche 1-6 gefärbte hydroxyl- oder amidgruppenhaltige Materialien.

**Claims**

1. Dyestuffs of the formula

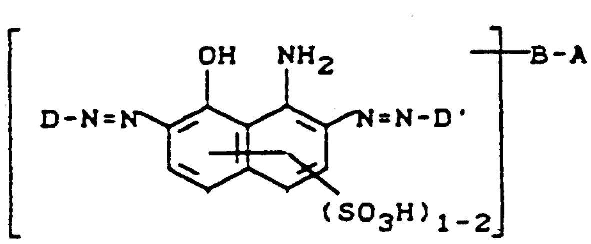

(1)

in which

A represents the radical of the formula

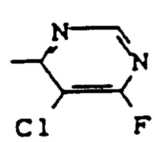

B represents a bridging member, the grouping

-B-A

being linked to a carbon atom of an aromatic or heteroaromatic ring system in D or D', and D and D' represent the radical of a diazo component from the benzene, naphthalene or hetaryl series, with the exception of the dyestuff of the formula

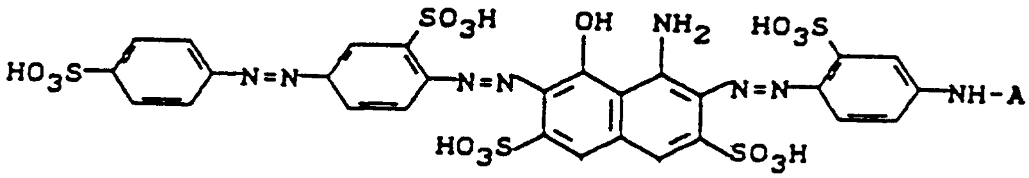
(2),

2. Dyestuffs according to Claim 1, in which
   B represents $-(CH_2)_{0-1}-NR-$ or $-SO_2-CH_2CH_2-NR-$,
   the bonding to A being in each case via the nitrogen atom, and
   R represents hydrogen or unsubstituted or hydroxyl-, chlorine-, carboxyl-, sulpho- or sulphato-substituted $C_1$-$C_4$-alkyl.

3. Dyestuffs of Claims 1 and 2 of the formulae

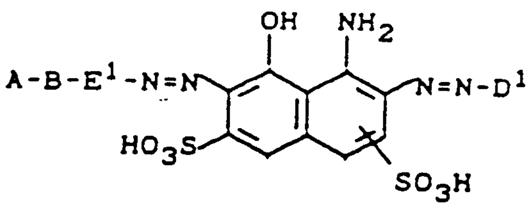
(3)

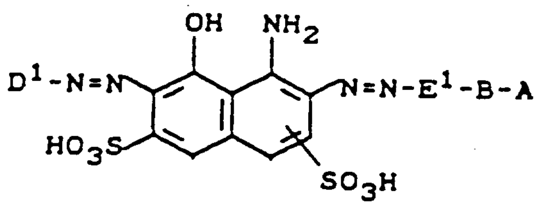
(4)

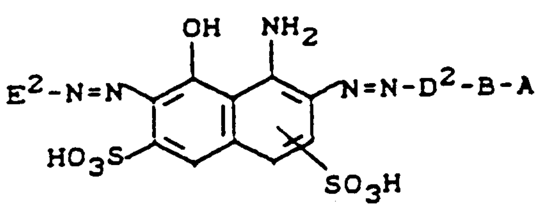
(5)

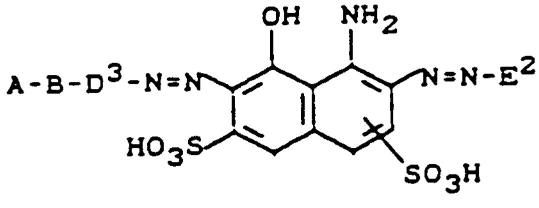
(6)

in which
   $-B-E^1-$ represents

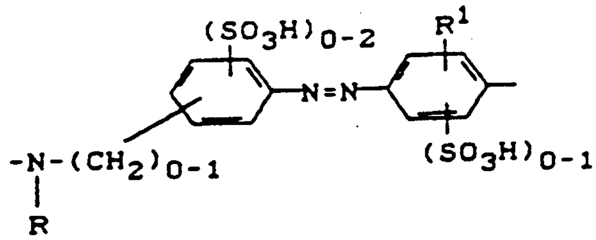

or

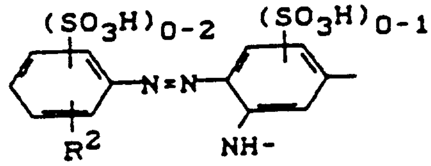

,

D[1] represents

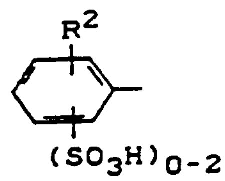

,

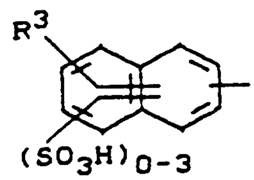

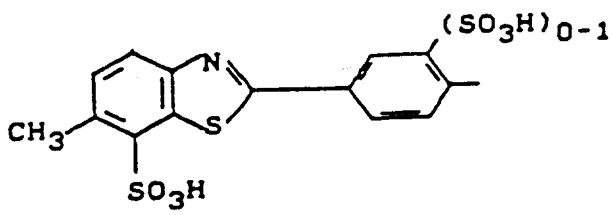

or

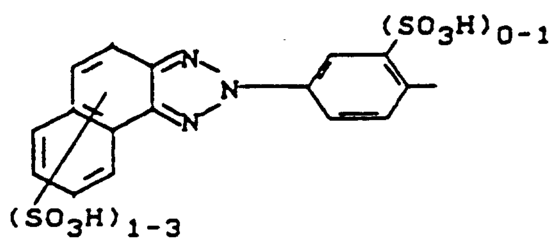

E[2] represents

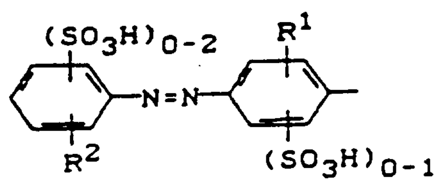

,

-B-D[2]- represents

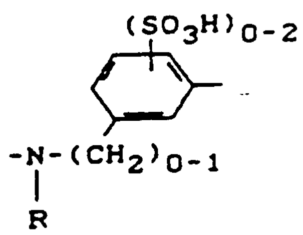 , 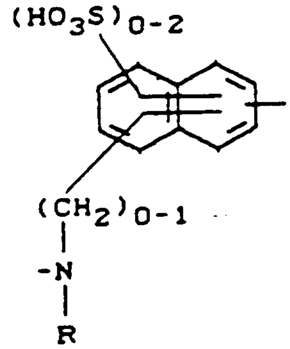 ,

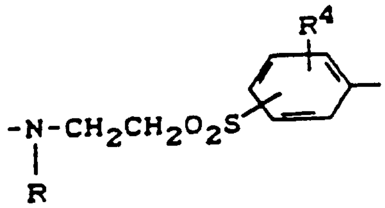 or 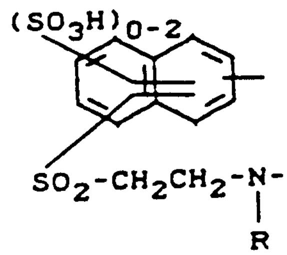

and

-B-$D^3$- represents

B-$D^2$- or

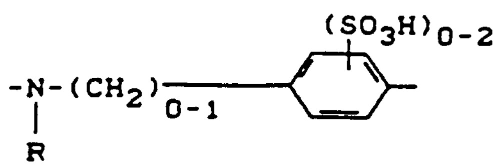 ,

in which

$R^1$ represents H, $CH_3$, -$C_2H_5$, -$OCH_3$, -$OC_2H_5$, Cl, Br, -$NHCOCH_3$ or -$NHCONH_2$,

$R^2$ represents H, $CH_3$, -$C_2H_5$, -$OCH_3$, -$OC_2H_5$, Cl, Br, -$CO_2H$, -$NHCOCH_3$, -$SO_2CH=CH_2$,-$SO_2CH_2CH_2OSO_3H$ or -$SO_2CH_2CH_2Cl$,

$R^3$ represents H, Cl, -$OCH_3$, -$OC_2H_5$,-$SO_2CH=CH_2$, -$CO_2H$, -$SO_2CH_2CH_2Cl$ or -$SO_2CH_2CH_2OSO_3H$ and

$R^4$ represents H, $CH_3$, Cl, Br, -COON, -$SO_3H$ or -$OCH_3$.

**4.** Dyestuffs of Claims 1, 2 and 3 of the formulae

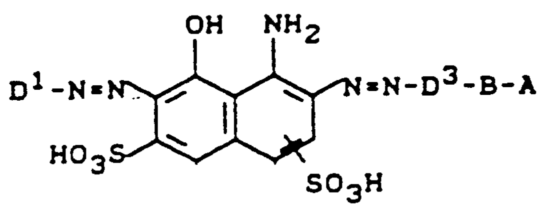

(7)

and

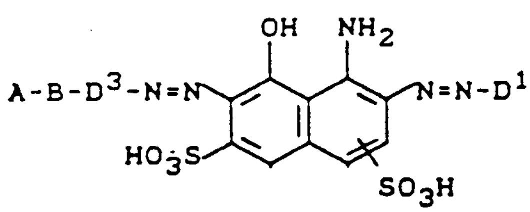

(8)

**5.** Dyestuffs of Claims 1-3 of the formula

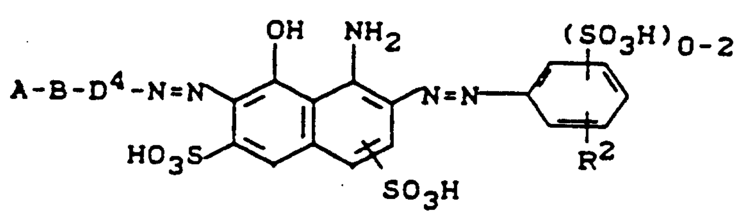

(9)

in which
B-$D^4$- represents

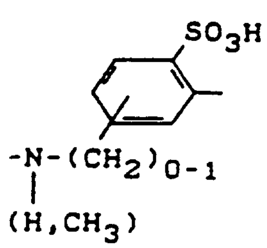

,

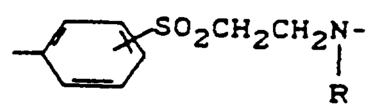

or

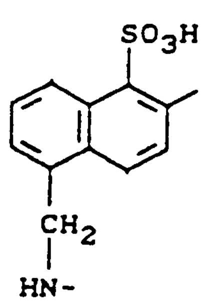

.

6. Dyestuffs of Claim 1 of the formulae

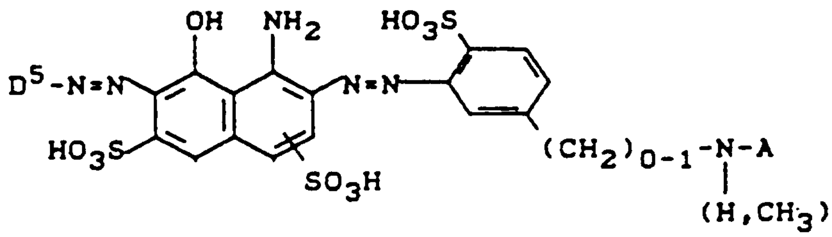

(10)

and

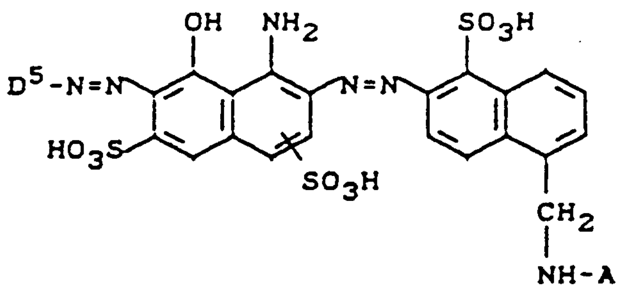

(11)

in which

$D^5$ represents

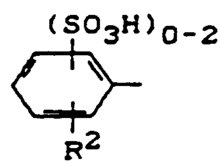

or

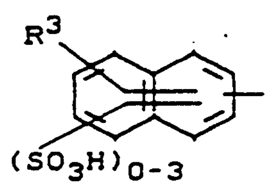

7. Use of the dyestuffs of Claims 1-6 for the dyeing and printing of hydroxyl- or amido-containing materials.

8. Hydroxyl- or amido-containing materials dyed with the dyestuffs of Claims 1-6.

**Revendications**

1. Colorants de formule :

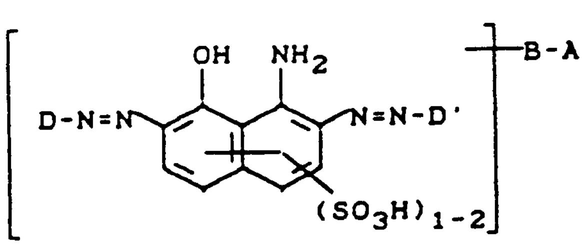

(1)

dans laquelle

A représente le reste de formule

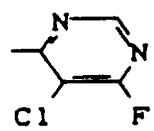

B représente un terme de pontage,

et le groupement -B-A

est relié à un atome de carbone d'un système cyclique, aromatique ou hétéroaromatique, de D ou D', et

D et D' représentent chacun le reste d'un composant diazotable de la série du benzène, du naphtalène ou de la série hétarylique,

à l'exclusion du colorant de formule

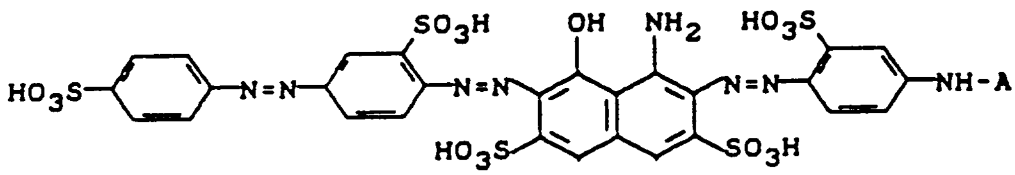

(2).

**2.** Colorants selon la revendication 1, dans lesquels

B représente-$(CH_2)_{0-1}$-NR- ou -$SO_2$-$CH_2CH_2$-NR-, la liaison avec A s'effectuant toujours par l'intermédiaire de l'atome d'azote, et

R représente un atome d'hydrogène où un groupe alkyle en $C_1$-$C_4$ éventuellement substitué par un reste hydroxy, chloro, carboxy, sulfo ou sulfato.

3. Colorants selon les revendications 1 et 2, répondant aux formules

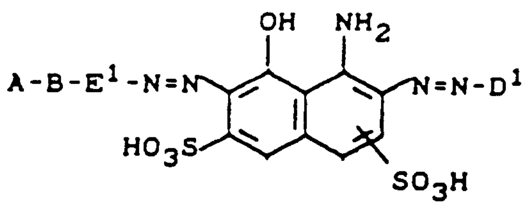

(3)

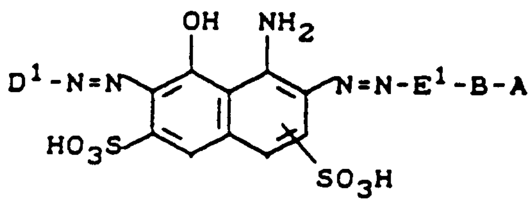

(4)

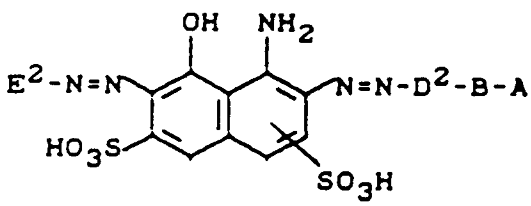

(5)

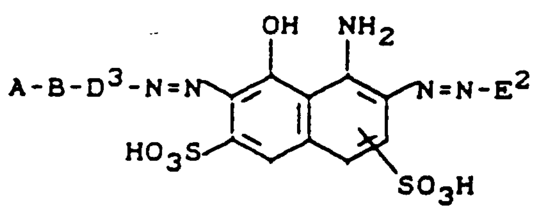

(6)

dans lesquelles

-B-E$^1$- représente

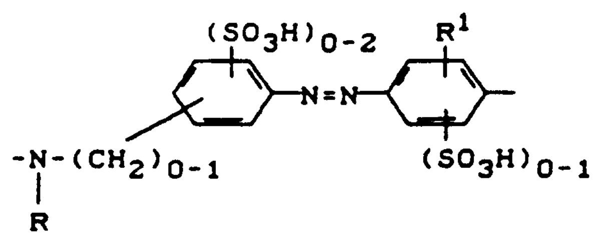

ou

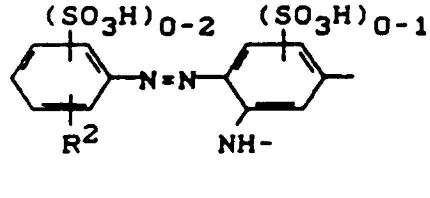

D$^1$ représente

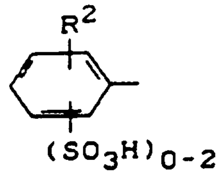

,

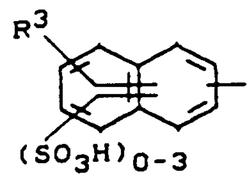

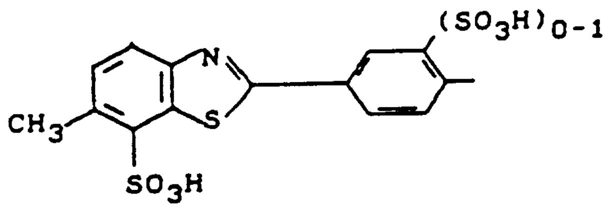

ou

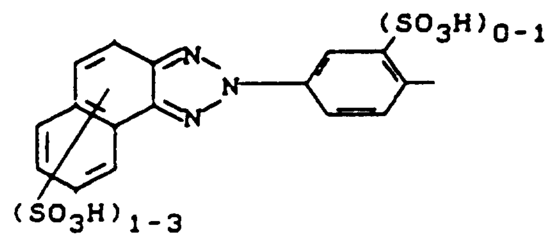

$E^2$ représente

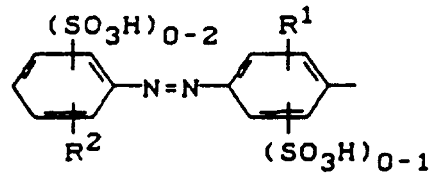

$-B-D^{2-}$ représente

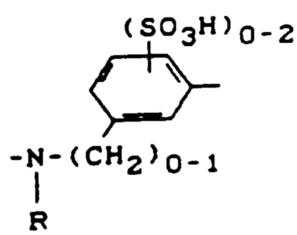

,

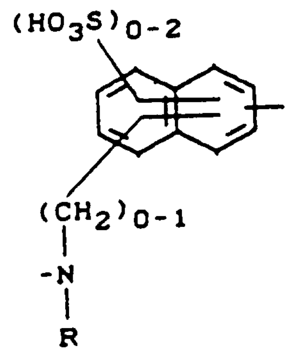

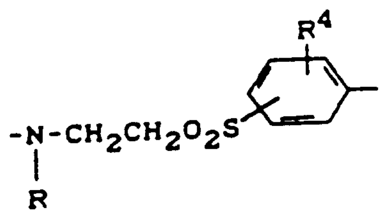

ou

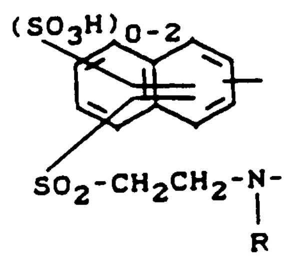

et

$-B-D^{3-}$ représente

B-$D^2$- ou

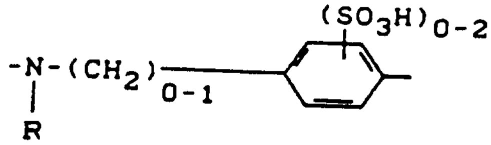

formules dans lesquelles

| | |
|---|---|
| $R^1$ représente | H ou un groupe $CH_3$, $-C_2H_5$, $-OCH_3$, $-OC_2H_5$, Cl, Br, $-NHCOCH_3$ ou $-NHCONH_2$, |
| $R^2$ représente | H ou un groupe $CH_3$, $-C_2H_5$, $-OCH_3$, $-OC_2H_5$, Cl, Br, $-CO_2H$, $-NHCOCH_3$, $-SO_2CH=CH_2$, $-SO_2CH_2CH_2OSO_3H$ ou $-SO_2CH_2CH_2Cl$, |
| $R^3$ représente | H, Cl ou un groupe $-OCH_3$, $-OC_2H_5$, $-SO_2CH=CH_2$, $-CO_2H$, $-SO_2CH_2CH_2Cl$ ou $-SO_2CH_2CH_2OSO_3H$ et |
| $R^4$ représente | H ou un groupe $CH_3$, Cl, Br, -COOH, $-SO_3H$ ou $-OCH_3$. |

**4.** Colorants selon les revendications 1, 2 et 3 répondant aux formules

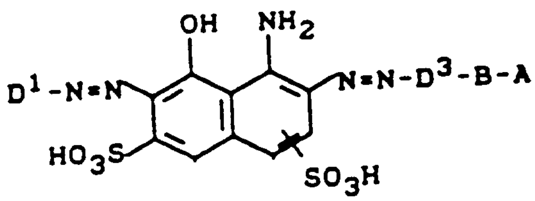

(7)

et

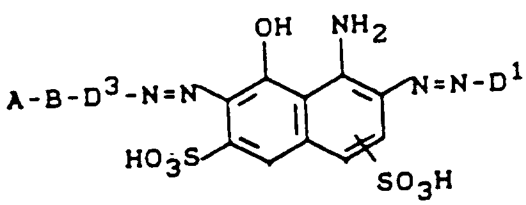

(8).

**5.** Colorants selon les revendications 1 à 3, de formule

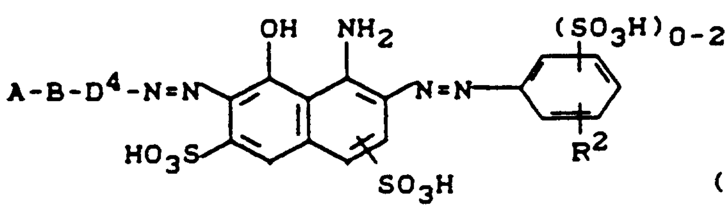

(9)

dans laquelle

B-$D^4$- représente

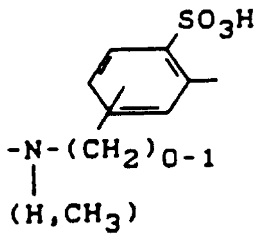
,
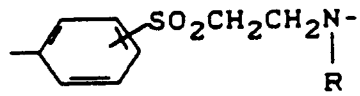

ou

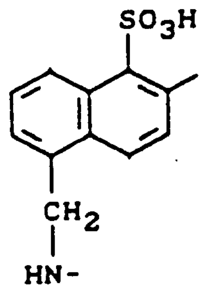

**6.** Colorants selon la revendication 1, répondant aux formules

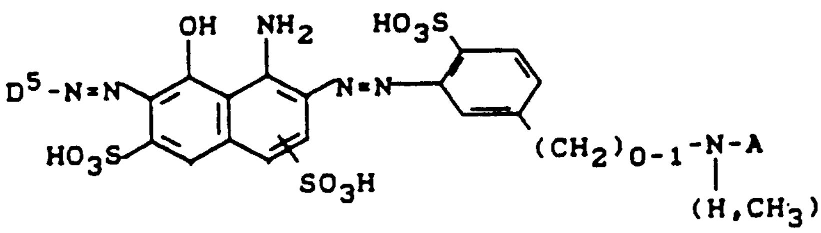

(10)

et

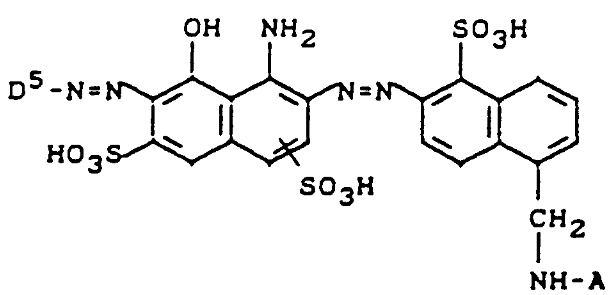

(11)

dans lesquelles

$D^5$ représente

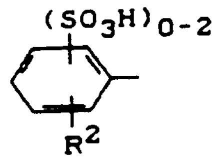

ou

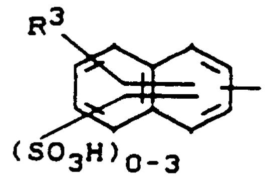

**7.** Utilisation des colorants selon les revendications 1 à 6 pour teindre et imprimer des matières contenant des groupes hydroxyles ou amides.

**8.** Matières contenant des groupes hydroxyles ou amides, teintes à l'aide des colorants selon les revendications 1 à 6.